# FASCICULE DE BREVET EUROPEEN

(11) **EP 0 533 027 B1**
(45) Date de publication et mention de la délivrance du brevet: **19.07.1995**
(21) Numéro de dépôt: 92115322.7
(22) Date de dépôt: 08.09.1992
(51) Int. Cl.: B23B 31/20, B23B 31/22, B23B 13/12

(54) **Canon de guidage**
Führungsbuchse
Guiding sleeve

(30) Priorité: 18.09.1991 FR 9111593
(43) Date de publication de la demande: 24.03.1993
(73) Titulaire: Habegger, Harold, CH-2738 Court (CH)
(72) Inventeur: Habegger, Harold, CH-2738 Court (CH)
(74) Mandataire: Thérond, Gérard Raymond

(56) Documents cités:
- US-A- 3 552 243

## Description

L'invention concerne un canon de guidage comprenant les caractéristiques du préambule de la revendication 1.

Plus particulièrement, elle concerne un canon de guidage notamment destiné à équiper une machine-outil, telle qu'un tour à décolleter à poupée mobile.

L'un des canons de guidage connus est un canon du type fixe, ce dernier étant logé, par l'intermédiaire d'un porte-canon, à l'intérieur d'un bloc-support, tandis qu'il comporte un fourreau solidaire du porte-canon à l'intérieur duquel peut être logée et supportée libre en rotation une barre à usiner.

Ce type de canon présente les inconvénients suivants.

Tout d'abord, en présence d'une barre présentant des variations de tolérances dimensionnelles importantes, notamment positives, c'est-à-dire lorsque la barre comporte dans certaines zones de fortes augmentations de son diamètre extérieur, on observe des risques de grippage qui entraînent le coincement de la barre à l'intérieur du canon, voire encore des variations de la vitesse angulaire de la barre par rapport à l'outil.

Dans le cas opposé, donc en présence de variations dimensionnelles négatives, c'est-à-dire lorsqu'une barre comporte par endroit de fortes diminutions de son diamètre extérieur, on obtient sur le produit usiné un diamètre extérieur différent de celui que l'on souhaitait obtenir (généralement plus grand), et ce à cause d'un déport du centre de la barre dû à la poussée latérale de l'outil sur celle-ci. Le document US 3 552 243 décrit en outre un manchon de guidage ayant un dispositif de guidage à galets, dont le diamètre peut être ajusté manuellement.

Par ailleurs, il existe sur le marché des canons tournants qui évitent bien entendu le problème du grippage, mais qui présentent l'inconvénient essentiel de reporter sur le produit fini les défauts de géométrie qui existaient sur la barre, telle que livrée.

Enfin, on connait des canons réglables qui comportent une pince associée à un écrou sur lequel on peut agir extérieurement et de façon manuelle. Encore une fois, ce type de canon ne répond que de façon très partielle aux problèmes susmentionnés. En effet, s'il est vrai que ce canon réglable permet de pallier, de façon grossière et sur une série donnée, les variations dimensionnelles de la barre à usiner, il ne permet pas un réglage permanent.

La présente invention a pour but de répondre aux inconvénients susmentionnés en fournissant un canon de guidage capable de pallier toutes les variations de tolérances dimensionnelles qui peuvent se présenter sur une barre à usiner ou d'une barre à l'autre, sans action manuelle extérieure, c'est-à-dire de façon quasi automatique et permanente, en évitant toute répercussion des défauts géométriques sur le produit fini. La présente invention a aussi pour but de fournir un canon de guidage qui permette l'usinage de pièces finies, usinées à des tolérances plus faibles que celles de la barre.

A cet effet, la présente invention a pour objet un canon de guidage, notamment destiné à équiper une machine-outil, telle qu'un tour à décolleter à poupée mobile, et du type comprenant :
- un porte-canon destiné à être positionné par rapport audit tour,
- un fourreau solidaire du porte-canon et comportant une pince de guidage susceptible de recevoir et de guider en rotation une barre à usiner,
- des moyens d'ouverture et de fermeture de la pince de guidage ajustant le diamètre de celle-ci par rapport au diamètre de la barre, et
- des moyens de réglage pouvant contrôler les moyens d'ouverture et de fermeture pour compenser des variations dimensionnelles positives et négatives du diamètre extérieur de la barre, caractérisé en ce que lesdits moyens de réglage comportent des moyens palpeurs qui sont disposés à l'intérieur du canon, en contact de frottement sur la barre à usiner, ces moyens palpeurs qui sont sensibles à toute variation du diamètre extérieur de la barre pilotant de façon instantanée les moyens d'ouverture et de fermeture de la pince en réponse auxdites variations, pour fournir un ajustement constant entre l'ouverture du canon et la barre.

Plus particulièrement, les moyens palpeurs sont placés au proche de la pince de guidage et en amont de celui-ci, par rapport à la direction d'avance de la barre dans le canon.

Mais d'autres caractéristiques et avantages d'une forme d'exécution de l'invention apparaîtront à la lecture de la description détaillée qui suit, faite en référence aux dessins annexés qui sont donnés à titre d'exemple, et dans lesquels:
- la figure 1 est une vue en demi-coupe longitudinale d'un canon de guidage selon l'invention, faite selon la flèche I-I de la figure porte-canon;
- la figure 2 est une vue de face du canon selon l'invention, faite selon la flèche II de la figure 1 et représentant des moyens de rappel et des moyens d'actionnement du canon, dans une position de travail (PT), en traits pleins, et dans des positions respectivement d'ouverture (PO) et de fermeture (PF), en traits mixtes interrompus;
- la figure 3 est une vue de dessus d'une rainure de clavette ménagée dans un fourreau du canon selon l'invention, cette figure étant faite selon la flèche III de la figure 1;
- la figure 4 est une vue de face d'un palier d'une pince équipant le canon de la figure 1 et faite selon le flèche IV de la figure 5;
- la figure 5 est une vue de côté du palier de la figure 4;
- la figure 6 est une vue de face de moyens palpeur équipant le canon de la figure 1 et faite selon la flèche VI de la figure 7; et
- la figure 7 est une vue de côté des moyens palpeur de la figure 6.

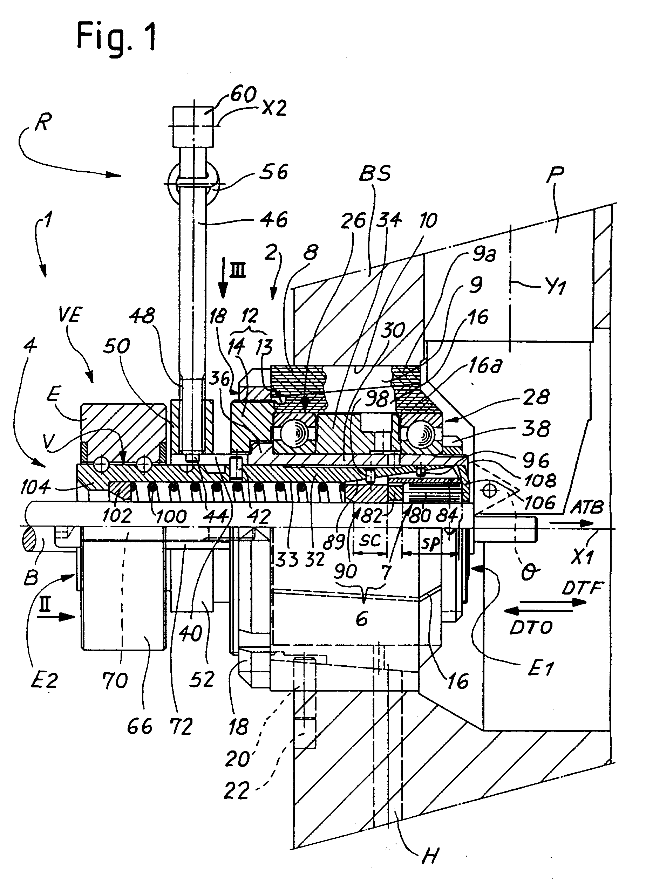

En se référant désormais aux figures 1 à 3, on décrira ci-après un mode de réalisation préféré d'un canon de guidage selon l'invention.

Le canon de guidage selon une forme d'exécution de l'invention, qui est repéré par la référence générale 1, est destiné à équiper une machine-outil, telle qu'un tour à décolleter à poupée mobile, non représenté. A cet effet, le canon 1 est logé au moins en partie à l'intérieur d'un bloc-support BS dans lequel est susceptible de se translater, selon un axe transversal Y1, un porte-outil P sur lequel est monté fixement, notamment par vissage, un outil O constitué, dans l'exemple représenté à la figure 1, par une plaquette d'usinage interchangeable.

Le canon de guidage 1 comporte un porte-canon 2 qui est monté fixement par rapport au bloc-support BS.

A l'intérieur de ce bloc-support BS est monté un fourreau représenté par la référence générale 4. Le fourreau 4 est mobile en rotation autour d'un axe longitudinal de rotation X1 qui est dans cet exemple perpendiculaire à l'axe transversal Y1

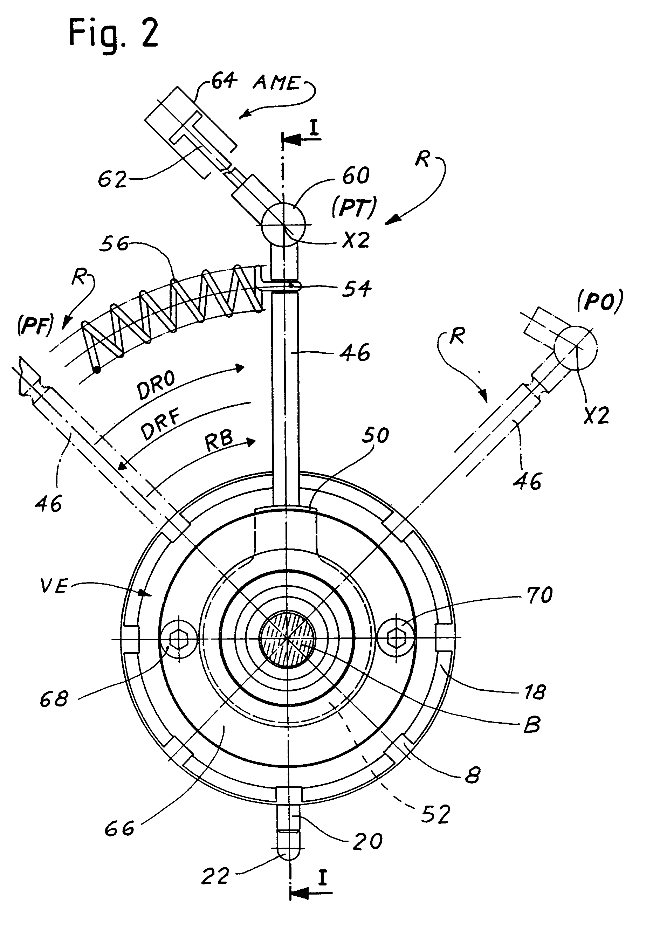

A l'intérieur du fourreau 4 est logée une pince coaxiale 6 qui est susceptible de recevoir et de guider en rotation une barre à usiner B. Cette barre B est entraînée, d'une part en rotation autour de l'axe X1 dans le sens de rotation représenté par la flèche RB sur la figure 2, et d'autre part en translation selon l'axe X1 dans un sens d'avance représenté par la flèche ATB, à la figure 1. La barre B est donc entraînée en rotation ainsi qu'en translation par rapport au canon 1 et par rapport à l'outil O, et ce par des moyens d'entraînement classiques non représentés. Les moyens d'entraînement de la barre B n'étant pas l'objet de la présente invention, ils ne seront donc pas décrits de façon plus détaillée.

Le porte-canon 2 comporte une douille extérieure 8 qui est réalisée en un matériau métallique et qui comporte, de part en part, une fente 9 partiellement remplie d'un matériau synthétique, tel que du silicone. Ce matériau forme une languette d'élasticité et d'étanchéité 9a permettant notamment l'extension radiale de la douille extérieure 8 qui, en étant logée directement à l'intérieur d'un alésage 10 ménagé dans le bloc-support BS, peut être bloquée dans celui-ci.

Le porte-canon 2 comporte par ailleurs une douille intérieure 12 qui est logée et coincée à l'intérieur de la douille extérieure 8. A cet effet, la douille intérieure 12 présente un corps tubulaire 13 de forme extérieure tronconique, qui est engagé à l'intérieur d'un alésage tronconique correspondant ménagé directement dans la douille extérieure 8.

La douille intérieure 12 comporte à une extrémité du corps 13 un culot ou fond 14 qui est fileté extérieurement et sur lequel est vissé un écrou à crans 18 venant en appui axial contre un flanc latéral de la douille extérieure 8. L'ecrou 18, en poussant sur la douille extérieure 8, exerce une traction sur la douille intérieure 12, et notamment sur son corps tubulaire 13. Cette traction, grâce à la liaison conique formant coin entre les deux douilles 8 et 12, permet de fournir une poussée radiale sur le corps 13 vers l'axe X1.

Pour cela, la douille intérieure 12 comporte des fentes d'élasticité 16 ménagée longitudinalement par fraisage directement dans le corps 13 jusqu'au culot ou fond fileté 14. Des languettes d'étanchéité 16a, de même réalisées en un matériau synthétique, tel que du silicone, sont injectées à l'intérieur des fentes 16 et ont la même fonction que les languettes 9a de la douille extérieure 8. On notera que les parties laissées vides des fentes 9 et 16 sont disposées en coïncidence pour permettre le passage d'un fluide de lubrification, ce dernier étant véhiculé au travers du porte-canon 2, ainsi que vers l'extérieur et vers l'intérieur du fourreau 4, via un canal d'amenée H ménagé dans le bloc-support BS. A cet effet, le porte-canon 2 est positionné angulairement grâce à une goupille d'indexage 20 logée en partie, d'une part dans le porte-canon 2 en pénétrant radialement dans les deux douilles 8 et 12, et d'autre part dans une rainure radial de positionnement 22 ménagée dans le bloc-support BS.

Dans un alésage qui est ménagé directement dans le corps 13 de la douille intérieure 12 sont logés deux roulements, tels que notamment des roulements à une rangée de billes 26 et 28, ces derniers étant destinés à supporter et à guider en rotation le fourreau 4. Les roulements 26 et 28 sont maintenus fixement en translation et sont positionnés axialement par rapport à l'axe longitudinal X1 grâce à la poussée radiale exercée, par le corps 13, sur leur bague extérieure, non référencée. La bague extérieure du roulement 26 repose en appui axial contre un épaulement, de même non référencé, ménagé directement dans le culot ou fond 14.

On notera que le bloc-support BS, le porte de canon 2 (constitué des deux douilles respectivement extérieure 8 et intérieure 12 et de l'écrou 18) ainsi que les bagues extérieures des roulements 26 et 28 sont maintenus fixement, notamment par rapport au tour à décolleter à poupée mobile, et ce par des moyens de fixation non représentés.

Le fourreau 4 comporte deux manchons ou arbres tubulaires coaxiaux 30 et 32, dits respectivement extérieur (30) et intérieur (32), de forme essentiellement cylindrique. Sur une partie du manchon extérieur 30, qui est dite avant, en référence à la direction d'avance de la barre B et qui est logée à l'intérieur du porte-canon 2, sont engagées directement les bagues intérieures, non référencées, des roulement respectivement 26 et 28. Le fourreau 4 qui est donc porté en rotation par et dans le porte-canon 2, est solidaire mécaniquement du porte-canon 2 par l'intermédiaire des deux roulements 26 et 28.

Entre les bagues intérieures des roulements 26 et 28 et sur le manchon extérieur 30 est engagée une entretoise 34 qui est interposée et qui est maintenue en appui axiale entre les bagues intérieures desdits roulements. On notera par ailleurs que la bague intérieure du roulement 26 repose latéralement sur un épaulement qui est formé par un collet radialement saillant 36 ménagé sur le manchon extérieur 30. Un écrou à crans 38 est directement vissé sur une extrémité libre E1 du fourreau 4, la plus proche de l'outil O, et plus particulièrement sur une extrémité libre filetée du manchon tubulaire extérieur 30 portant la même référence. L'ecrou 38 bloque latéralement et directement la bague intérieure du roulement 28, et il maintient axialement, sur le manchon extérieure 30, les deux roulement 26 et 28, ainsi que l'entretoise 34 entre ceux-ci.

On remarquera ici que le fourreau 4, et notamment les deux manchons respectivement extérieur 30 et intérieur 32, les bagues intérieures des roulements 26 et 28, l'entretoise 34 ainsi que l'écrou 38 sont mobiles en rotation, d'une part, autour de l'axe longitudinale de rotation X1, et d'autre part, par rapport au porte-canon 2 ainsi que par rapport au bloc-support BS.

Toutefois, on précisera que le manchon extérieur 30, ainsi que tous les éléments 26,28, 34 et 38 qui sont portés extérieurement sur celui-ci sont maintenus fixes en translation par rapport au bloc-support BS et par rapport au porte-canon 2.

Sur le manchon tubulaire extérieur 30, et notamment sur une partie de celui-ci qui est dite arrière et qui fait saillie extérieurement du porte-canon 2 dans une direction opposée à l'outil O, est ménagée une rainure de clavette partiellement oblongue 40 qui débouche de part et d'autre en direction radiale, et notamment en regard du manchon intérieur 32. La rainure 40 débouche également de façon axiale, dans une direction opposée à l'outil, en regard d'une bague d'un système vis-écrou VE que l'on décrira ci-après.

A l'intérieur de la rainure 40 est logée une première goupille de blocage 42 qui est maintenue fixement à l'intérieur du manchon intérieur 32, notamment par un emmanchement à force, c'est-à-dire par chassage.

Cette goupille de blocage 42 qui fait saillie radialement du manchon intérieur 32 est conformée pour pouvoir coulisser axialement à l'intérieur de la rainure 40 qui guide libre en translation la goupille 42 selon l'axe longitudinale X1 tout en assurant l'accouplement en rotation des deux manchons 30 et 32, l'un par rapport à l'autre. On remarquera donc que la goupille 42 et la rainure 40 forment des moyens d'assujettissement en rotation des manchons respectivement extérieur 30 et intérieur 32, tout en leur permettant de pouvoir se translater librement l'un par rapport à l'autre. La goupille du blocage 42 et la rainure radialement débouchante 40 présentent donc en d'autres termes une fonction clavette.

Par ailleurs, a l'intérieur de la rainure 40 fait saillie radialement un téton 44 ménagé à l'extrémité libre d'une tige formant bras de levier 46 qui comporte, au voisinage de ce téton 44, un filetage 48.

La tige filetée 46 est vissée dans une partie taraudée 50 d'un collier 52 par un ajustement glissant sur la partie arrière du manchon extérieur 30 qui fait extérieurement saillie du porte.canon 2 et dans laquelle est ménagée directement la rainure 40. Le collier 52 chevauche donc directement la rainure de clavette 40.

Le maintien de la tige 46, par rapport au manchon extérieur 30 ainsi que sur celui-ci, est assuré uniquement par l'aboutement du filetage 48 de la tige 46 sur le pourtour extérieur du manchon 30.

On précisera ici que le téton 44 assure l'accouplement et la liaison mécanique en rotation entre la tige 46 et le manchon extérieur 30.

A l'autre extrémité de la tige 46 est ménagée une gorge 54 (figure 2) à l'intérieur de laquelle est logée une première extrémité d'un organe élastique constitué par un ressort hélicoïdal de traction 56 dont la seconde extrémité, non représentée, est maintenue fixement par des moyens d'accrochage classiques à un support fixe, de même non représenté.

Au voisinage du ressort de traction 56, et à l'extrémité la plus proche de la tige 46, est ménagée une articulation 60 pouvant pivoter autour d'un deuxième axe longitudinal X2 de rotation, parallèle au premier X1, et faisant partie de moyens d'actionnement extérieur AME qui sont représentés ici de façon très schématique par un vérin formé d'un piston 62 coulissant à l'intérieur d'un cylindre 64, tenu fixement par des moyens support, ici non représentés. Les moyens d'actionnement AME permettent d'actionner positivement, c'est-à-dire à volonté jusque dans une position voulue, la rotation du fourreau 4 vers au moins deux positions respectivement d'ouverture (PO) et de fermeture (PF) de la pince 6 et permettent aussi de maintenir ledit fourreau dans ces deux positions qui sont représentées en traits mixtes interrompus à la figure 2. Pour cela, les moyens d'actionnement AME comportent un circuit de commande classique (non représenté) du type pneumatique et/ou électronique apte à piloter la translation du piston 62. L'ouverture commandée de la pince 6 permet l'extraction d'une barre, et notamment d'une chute en fin d'usinage, tandis que la fermeture commandée permet le ravitaillement de barres à usiner.en immobilisant la barre qui forme dans ce cas butée.

On comprendra par la suite que la tige 46, le ressort de traction 56 constituent des moyens de rappel élastique du fourreau 4, ces moyens de rappel étant repérés par la référence générale R.

Les moyens de rappel R sont susceptibles de ramener élastiquement tout déplacement en rotation du fourreau 4 effectué dans un sens de rotation, dit d'ouverture (représenté à la figure 2 par la flèche DRO). Ces moyens de rappel élastique R ont donc en permanence tendance à ramener le fourreau 4 dans un sens DRF, dit de fermeture, opposé au sens d'ouverture DRO. On comprendra ultérieurement que les sens de rotation DRO et DRF correspondent respectivement aux sens d'ouverture et de fermeture de la pince 6 qui est logée à l'intérieur du fourreau 4.

Le canon de guidage 1 selon l'invention comporte par ailleurs un système vis-écrou VE disposé sur une extrémité libre E2 (figure 1) du fourreau 4. Cette extrémité qui est opposée à l'extrémité libre E1 fait saillie extérieurement du porte-canon 2 dans une direction opposée à l'ensemble outil O-porte-outil P.

Le système vis-écrou VE comporte une vis à billes dont la vis V est ménagée directement sur le pourtour extérieur du manchon intérieur 32, au voisinage de son extrémité libre E2 et sur sa partie arrière, et ce par l'intermédiaire d'une gorge hémisphérique appropriée.

Le système vis-écrou VE dont la vis V est ainsi ménagée directement sur le fourreau 4, comporte par ailleurs un écrou E qui est ménagé dans une bague 66 montée fixement par rapport au porte-canon 2 et directement sur celui-ci par l'intermédiaire de deux vis à tête 68 et 70, ces dernières étant vissées dans des taraudages ménagés à l'intérieur du culot 14 de la douille intérieure 12.

Des entretoises 72 (dont une seule a été représentée en demi-vue de côté sur la figure 1) constituées par des bagues tubulaires, sont engagées autour de chacune des vis 68 et 70 et sont interposées latéralement entre la bague formant écrou 66 et le culot 14 de la douille intérieure 12.

On précisera aussi que les vis 68 et 70 associées respectivement aux entretoises 72 forment des butées du déplacement angulaire de la tige 46.

A l'intérieur du fourreau 4, et notamment dans le manchon intérieur 32 est logée la pince 6 qui est conformée pour pouvoir recevoir et guider en rotation une section dite portée SP de la barre à usiner B.

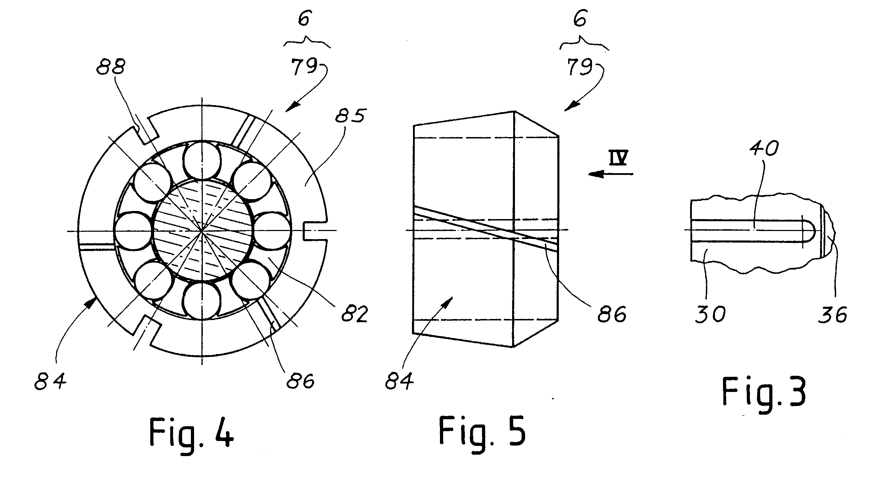

La pince 6 qui est représentée en partie de façon plus détaillée aux figures 4 et 5 est formée par un palier 79 comportant un ensemble de galets ou rouleaux 80 montés libres en rotation, directement en contact (par un frottement de roulement) sur le pourtour extérieur de la section portée SP de la barre à usiner B. Les rouleaux 80 sont maintenus radialement en étant emprisonnés par une cage 82. La cage 82 ainsi que les rouleaux 80 sont logés et maintenus extérieurement en direction radiale par l'intermédiaire d'une bague extérieure 84 qui est constituée de trois secteurs (dont un seul, 85, a été référencé) séparés par des fentes d'espacement 86. Les secteurs 85 et la bague 84 ont une forme extérieure du type à double tronc de cône, dite biconique.

La bague biconique 84 comporte par ailleurs trois rainures longitudinales 88 qui sont respectivement ménagées extérieurement sur les segments 85 et qui débouchent, d'une part axialement de part et d'autre de la bague 84, et d'autre part radialement uniquement vers l'extérieur, en regard du manchon 32 (figure 1). Les rainures 88 sont orientées selon l'axe de rotation X1 et elles sont décalées de 120° l'une par rapport à l'autre. Le pourtour extérieur tronconique dit arrière de la bague 84 est conformé pour venir s'engager à l'intérieur de l'extrémité libre E1 du manchon intérieur 32, et plus particulièrement à l'intérieur d'un logement 89, de forme tronconique correspondante. On notera que ce pourtour tronconique arrière est le seul qui soit fonctionnel, le pourtour avant permettant uniquement un dégagement.

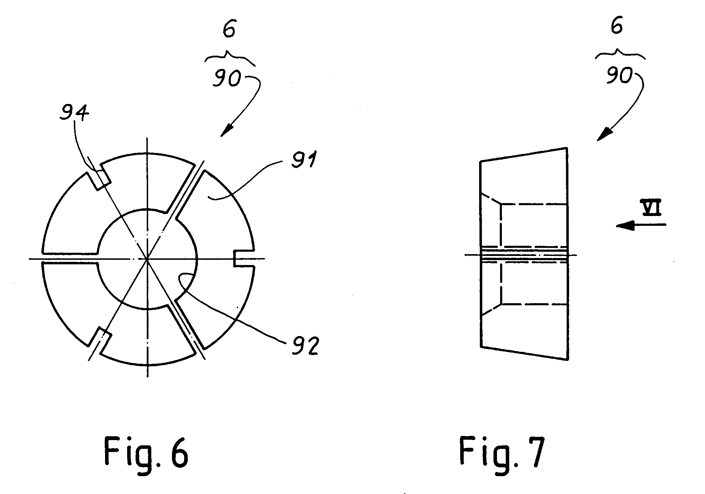

Par ailleurs, en amont du palier à rouleaux 79 (toujours par rapport à la direction d'avance en translation ATB de la barre à usiner B, figure 1) sont disposés des moyens palpeur 90 constitués, comme on le voit mieux sur les figures 6 et 7, par trois segments (dont un seul, 91, a été référencé) de forme extérieurement tronconique conformés pour venir se loger à l'intérieur du logement en bout 89.

Les trois segments 91 qui forment les moyens palpeur 90 matérialisent un alésage cylindrique 92 à diamètre variable, cet alésage étant en en contact de frottement permanent (frottement de glissement) contre la barre à usiner B, et notamment contre une section de celle-ci dite section contrôlée SC. Les moyens palpeur 90 sont aptes à détecter toute variation dimensionnelle négative et/ou positive de la barre B, et ils sont aptes à détecter à chaque instant toute variation du diamètre de la barre B dans la section contrôlée SC lorsque cette barre est animée d'un mouvement de rotation. Ces moyens palpeur 90 forment notamment des moyens de détection desdites variations dimensionnelles.

On remarquera de la section contrôlée SC est avantageusement disposée sur la barre B directement avant la section portée SP, par rapport à la direction d'avance en translation ATB de la barre B, c'est-à-dire qu'elle est disposée en amont de cette section portée SP.

On remarquera que les trois segments 91 qui forment les moyens palpeur 90 comportent chacun une rainure 94, ces dernières ayant la même configuration que celle des rainures 88.

On précisera ici que les rainures 88 et 94 respectivement du palier 79 et des moyens palpeur 90 sont conformées pour recevoir respectivement des deuxième et troisième goupilles de blocage en rotation 96 et 98 qui font radialement saille et qui sont tenues fixement, notamment par un emmanchement à force du type chassage, à l'intérieur du manchon 32.

On comprend donc que les moyens palpeur 90 ainsi que le palier 79 forment ensemble la pince 6 qui est du type pince à friction. Les moyens palpeur forment l'entrée de la pince 6 et c'est pourquoi l'alésage 92 est chanfreiné à l'arrière, en direction de l'extrémité E2 du fourreau 4, extrémité par laquelle la barre B est introduite.

Ces moyens palpeur 90 et le palier 79 sont solidaires en rotation, d'une part du manchon tubulaire 32 par l'intermédiaire des ensembles goupilles 96,98-rainures 88,94 qui forment des liaisons clavettes, et d'autre part du manchon tubulaire extérieur 30 par l'intermédiaire de la goupille 42 et de la rainure 40. Ainsi, les moyens palpeur 90 et le palier 79 qui forment la pince à friction 6 sont solidaires en rotation du fourreau 4. Toutefois, ces éléments 90 et 76 peuvent se translater librement par un déplacement axiale selon l'axe X1, par rapport au fourreau 4 et notamment par rapport au manchon tubulaire intérieur 32.

A l'intérieur du manchon tubulaire 32 est logé un autre organe élastique constitué par un ressort hélicoïdal de compression 100 logé directement et de façon coaxiale à l'intérieur d'un alésage cylindrique 33 ménagé dans le manchon intérieur 32, dans le prolongement du logement tronconique 89 et de façon contiguë à celui-ci.

On remarquera que le ressort hélicoïdal de compression 100 repose latéralement par ses deux extrémités et est donc mis sous tension, d'une part contre les moyens palpeur 90, et d'autre part contre une cale de réglage 102 qui est logée dans l'alésage 33 et qui est maintenue dans celui-ci axialement par un épaulement formé sur un collet 104 ménagé à l'extrémité E2 du fourreau 4, et plus particulièrement à l'extrémité libre correspondante du manchon 32.

Cette cale de réglage 102 ainsi que le collet 104 présentent chacun un chanfrein permettant l'introduction dans le fourreau 4 de la barre à usiner B.

La cale 102 peut être choisie ou usinée en épaisseur en fonction de la force que l'on souhaite appliquer axialement sur la pince 6.

On remarquera par ailleurs que cette force est transmise au palier 79 de la pince 6 par l'intermédiaire des moyens palpeur 90 qui sont en appui latéral contre la cage 82 et contre les segments 85 de la bague 84.

Le palier 79, par l'intermédiaire des rouleaux 80, repose par ailleurs en contact axial contre une butée formée par une coupelle 106 logée directement à l'intérieur du manchon extérieur 30 et maintenue dans celui-ci par un bourrelet 108 formé à l'extrémité libre E1 du manchon 30.

Le fonctionnement du canon de guidage selon l'invention est le suivant.

On décrira tout d'abord le mode de fonctionnement automatique où les moyens d'actionnement AME sont rendus inopérants par exemple par une mise en circuit ouvert de leur circuit pneumatique, non représenté.
lorsqu'une barre B, qui est animée du mouvement de rotation RB et qui est en train d'être usinée par l'outil O ou qui vient juste d'être introduite dans le fourreau 4 par l'extrémité d'entrée E1, présente une section contrôlée SC de diamètre extérieur sensiblement plus grand (variations de tolérances dimensionnelles positives) que celui de l'alésage 92 des moyens palpeur 90 ou de la section portée SP de la barre B, il se produit immédiatement à cause de l'ajustement qui devient serré entre cette section contrôlée SC et les moyens palpeur 90 un grippage mécanique dû au frottement entre les moyens palpeur 90 et la barre B.

Ce grippage entraîne immédiatement en rotation les moyens palpeur 90 qui sont beaucoup plus sensibles que le palier 79 à toute variation dimensionnelle de la barre à cause de leur contact de frottement avec celle-ci, frottement qui est du type frottement de glissement

Les moyens palpeur 90 étant assujettis mécaniquement du moins en rotation au fourreau 4 comme expliqué ci-avant, les deux manchons 30 et 32 sont entraînés de façon subséquente en rotation autour de l'axe longitudinale de rotation X1, ce qui provoque immédiatement le déplacement angulaire de tout le fourreau 4 (et de la tige 46) dans le sens de rotation représenté par la flèche DRO.

Le manchon 30 étant lié au système vis-écrou VE qui présente notamment un pas à gauche, il se produit automatiquement, grâce à la rotation du fourreau 4, un déplacement concomitant en translation du manchon tubulaire intérieur 32 uniquement, et ce dans un sens de déplacement en translation représenté par la flèche DTO à la figure 1. Puisque le manchon intérieur 32 se déplace vers l'arrière sur la figure 1, le logement tronconique 89 a tendance à quitter son contact (décollement et glissement tangentiel) avec les moyens palpeur 90 et avec le palier 79 formant la pince 6.

Cette séparation est assurée par l'action du ressort hélicoïdale de compression 100 qui repousse et écarte axialement du manchon 32 et surtout du logement en bout 89, les moyens palpeur 90 ainsi que le palier 79. De ce fait, on remarque que le ressort hélicoïdale de compression 100 forme un premier organe élastique susceptible de déplacer axialement la pince 6 par rapport au fourreau 4 pour la libérer radialement.

On peut par ailleurs constater que (1) le déplacement en translation du manchon intérieur 32 au loin des moyens palpeur 90 et du palier 79, et que (2) le système vis-écrou VE en association avec le premier organe élastique 100 constituent des moyens d'ouverture de la pince 6 qui sont directement sensibles aux variations dimensionnelles positives de la barre à usiner B, le ressort hélicoïdal 100 ou premier organe élastique étant actionné directement par le déplacement en translation du fourreau 4, et notamment par le déplacement en translation du manchon 30.

Par ailleurs, si dans le cas opposé, la section contrôlée SC de la barre à usiner B présente un diamètre extérieur plus petit que celui de la section portée SP de cette même barre B (variations de tolérances dimensionnelles négatives), il y a création d'un jeu entre le pourtour extérieur de la section contrôlée SC et l'alésage 92 des moyens palpeur 90, ce qui permet aux moyens de rappel R (qui ont d'ailleurs été précédemment déplacés) de ramener, dans le sens de rotation représenté par la flèche DRF à la figure 2, le fourreau 4 dans un sens de rotation dit sens de fermeture.

On notera que ce sens de fermeture est opposé au sens de rotation de la barre B représenté sur la figure 2 par la flèche RB. Puisque la tige 46 des moyens de rappel est assujettie mécaniquement en rotation au fourreau F par le manchon extérieur 30, le rappel de la tige 46 entraîne, grâce au système vis-écrou VE qui forment moyens de transformation de mouvement, le déplacement en translation du fourreau 4 et notamment du manchon intérieur 32, selon un sens de déplacement représenté par la flèche DTF (figure 1).

De ce fait le logement conique 89 revient ou à tendance à revenir en pression contre les moyens palpeur ainsi que contre le palier 79, ce qui engendre un déplacement radial de la pince 6 vers la barre à usiner B et notamment vers sa section portée SP, ou du moins ce qui augmente la pression de serrage sur celle-ci.

On constate donc que la tige 46 qui forme un bras de levier solidaire du fourreau 4 en étant liée à un ressort de traction 56 constitue des moyens de rappel R mais aussi, en association avec le manchon intérieur 32, des moyens de fermeture de la pince 6. On remarquera que les déplacements angulaires de la tige 46 peuvent être limités entre les deux butées constituées par les entretoises 72 et les vis 68 et 70. Dans ce cas, la tige 46 et les moyens de rappel R du canon selon l'invention occupent leur position, dite de travail, qui est référencée (PT) et qui est représentée en traits pleins à la figure 2.

On remarquera aussi que les moyens de rappel R qui sont constitués par l'organe élastique, dit second organe élastique, formé par le ressort 56 lié au fourreau 4, sont susceptibles de provoquer le mouvement rotatif de ce fourreau et son déplacement concomitant en translation pour solliciter radialement la pince 6 dans sa direction radiale de fermeture, c'est-à-dire vers la barre B.

On remarquera par ailleurs que sur le plan fonctionnel les moyens de fermeture de la pince, qui sont constitués par les moyens de rappel R ainsi que plus précisément par le logement conique en bout 89 du manchon intérieur 32 et par les régions tronconiques correspondantes du palier 79, sont directement sensibles aux variations dimensionnelles négatives de la barre B.

On peut par ailleurs noter que les moyens palpeur 90 forment des moyens de pilotage des moyens d'ouverture et des moyens de fermeture, ce qui permet l'ajustement quasi-instantané et automatique de ces derniers sur la barre B.

On comprend également de ce qui vient d'être décrit que le fourreau 4 présente un mouvement rotatif oscillant autour de la position de travail (PT), à la recherche permanente d'un équilibre entre une action d'ouverture et une action de fermeture de la pince 6 par rapport à la barre B.

On a donc fourni des moyens de réglage pilotés par un mouvement rotatif oscillant du fourreau, mouvement qui est sensible aux variations de tolérances dimensionnelles de la barre B. On remarque aussi que sur le plan fonctionnel les moyens de réglage selon l'invention sont contrôlés mécaniquement par la barre elle-même.

Ainsi, ces moyens de réglage qui sont susceptibles de contrôler les moyens d'ouverture et de fermeture du canon pour compenser les variations de tolérances dimensionnelles positives et négatives de la barre sont susceptibles d'actionner de façon instantanée les moyens d'ouverture et de fermeture de la pince 6, directement en réponse aux variations de tolérances dimensionnelles de la barre à usiner, pour fournir une pression de la pince 6 sur la barre B qui soit sensiblement constante.

On remarquera que les caractéristiques fonctionnelles du canon de guidage selon l'invention sont aussi permises grâce à la disposition d'organes de transformation de mouvement formés par le système vis-écrou VE qui est associé au fourreau 4 et qui est conformé pour transformer le mouvement rotatif oscillant du fourreau 4 en un déplacement concomitant en translation de celui-ci, en avant ou en arrière, respectivement selon les flèches, soit DTO, soit DTF; ce déplacement en translation étant apte à actionner directement les moyens d'ouverture et de fermeture de la pince 6.

Le mode de fonctionnement commandé est similaire au mode de fonctionnement précédemment décrit. Le mode de fonctionnement commandé se différencie toutefois par la commande des moyens d'ouverture et de fermeture qui se fait de façon positive, grâce à l'action des moyens de commande AME et notamment du vérin 62,64. Les moyens palpeur 90 sont donc à l'état de repos, ce mode de fonctionnement pouvant être mis en oeuvre quel que soit l'état de mouvement de la barre, donc aussi bien quand elle est dans un état dynamique que statique. La tige 46 actionne toujours la fermeture de la pince 6 grâce à la cinématique et à l'agencement des éléments précédemment décrits, et ce sous l'effet du ressort 56 qui est éventuellement aidé par les moyens de commande AME.

De plus, la tige 46 peut commander l'ouverture de la pince 6 par la rotation et par le déplacement subséquent du fourreau 4, tel qu'expliqué précédemment, cette fois ci sous l'effet des moyens d'actionnement AME uniquement, qui deviennent prioritaires par rapport aux moyens de détection et de pilotage formés entre autres par les moyens palpeur 90.

Enfin, on précisera que la pince 6 peut être constituée dans un exemple de réalisation non représenté uniquement par des segments, tels que les segments 91 de la figure 6, recouvrant les deux sections respectivement contrôlée SC et portée SP, sans comporter de palier à rouleaux.

Une pince de ce type est donc une pince totalement à friction dans laquelle le palier forme en même temps moyens palpeur.

## Revendications

1. Canon de guidage, notamment destiné à équiper une machine-outil, telle qu'un tour à décolleter à poupée mobile, et du type comprenant :
- un porte-canon (2) destiné à être positionné par rapport audit tour,
- un fourreau (4) solidaire du porte-canon (2) et comportant une pince de guidage (6) susceptible de recevoir et de guider en rotation une barre (B) à usiner,
- des moyens d'ouverture et de fermeture de la pince de guidage (6) ajustant le diamètre de celle-ci par rapport au diamètre de la barre, et
- des moyens de réglage pouvant contrôler les moyens d'ouverture et de fermeture pour compenser des variations dimensionnelles positives et négatives du diamètre extérieur de la barre (B), caractérisé en ce que lesdits moyens de réglage comportent des moyens palpeurs (90) qui sont disposés à l'intérieur du canon (1), en contact de frottement sur la barre à usiner (B), ces moyens palpeurs (90) qui sont sensibles à toute variation du diamètre extérieur de la barre (B) pilotant de façon instantanée les moyens d'ouverture et de fermeture de la pince en réponse auxdites variations, pour fournir un ajustement constant entre l'ouverture du canon (1) et la barre (B).

2. Canon de guidage selon la revendication 1, caractérisé en ce que les moyens palpeurs (90) sont placés au proche de la pince de guidage (6) et en amont de celle-ci, par rapport à la direction d'avance de la barre (B) dans le canon (1).

3. Canon de guidage selon la revendication 1 ou 2, caractérisé en ce que lesdits moyens palpeurs sont constitués par des organes essentiellement mécaniques (91), liés en rotation au fourreau (4).

4. Canon de guidage selon l'une des revendication 1 à 3, caractérisé en ce que les moyens palpeurs (90) sont constitués par des segments de forme extérieurement tronconique, en appui contre une surface tronconique correspondante (89) du fourreau (4).

5. Canon de guidage selon l'une des revendication 1 à 4, caractérisé en ce que la pince de guidage (6) comporte des galets ou rouleaux (80) destinés à venir en contact de roulement directement sur le diamètre extérieur de la barre (B).

6. Canon de guidage selon la revendication 5, caractérisé en ce que les galets ou rouleaux (80) sont logés dans une bague (84) qui présente un pourtour extérieur tronconique disposé en appui contre une surface tronconique correspondante (89) du fourreau (4).

7. Canon de guidage selon la revendication 6, caractérisé en ce que les moyens palpeurs (90) sont placés en appui latéral contre la bague (84).

8. Canon de guidage selon l'une quelconque des revendications précédentes, caractérisé en ce que ledit fourreau (4) coopère avec des moyens de rappel (R) pour pouvoir prendre, en réponse à l'action des moyens palpeurs (90), un mouvement rotatif oscillant autour d'une position de travail (PT) correspondant audit ajustement.

9. Canon de guidage selon la revendication 8, caractérisé en ce que les moyens de rappel (R) comportent un organe élastique (56) qui est lié au fourreau (4) et qui est susceptible de provoquer son mouvement rotatif et son déplacement en translation concomitant pour solliciter radialement la pince de guidage (6) dans sa direction radiale de fermeture.

10. Canon de guidage selon la revendication 9, caractérisé en ce que les moyens de rappel (R) comportent une tige (46) formant bras de levier, cette tige(46) qui est solidaire du fourreau (4) étant liée à un ressort de traction formant l'organe élastique (56), ladite tige (46) étant limitée dans son déplacement angulaire entre deux butées (68,70,72).

11. Canon de guidage selon la revendication 8, caractérisé en ce qu'il comporte des organes (VE) de transformation de mouvement conformés pour transformer le mouvement rotatif oscillant du fourreau (4) en un déplacement concomitant en translation de celui-ci, ce déplacement en translation étant apte à actionner directement les moyens d'ouverture et de fermeture de la pince (6).

12. Canon de guidage selon la revendication 11, caractérisé en ce que les moyens de transformation de mouvement comportent un système vis-écrous (VE) associé au fourreau (4).

13. Canon de guidage selon la revendication 12, caractérisé en ce que le système vis-écrou (VE) comporte une vis à billes dont la vis (V) est ménagée sur le fourreau (4), tandis que l'écrou (E) est ménagé dans une bague (66) montée fixement par rapport au porte-canon (2).

14. Canon de guidage selon la revendication 11, caractérisé en ce que les moyens d'ouverture de la pince de guidage (6) comportent un organe élastique (100) actionné par le déplacement en translation du fourreau (4).

15. Canon de guidage selon la revendication 14, caractérisé en ce que l'organe élastique (100) est constitué par un ressort hélicoïdal de compression logé à l'intérieur du fourreau (4).

16. Canon de guidage selon la revendication 15, caractérisé en ce que le ressort hélicoïdal de compression (100) est susceptible de déplacer axialement la pince de guidage (6) par rapport au fourreau (4) pour le libérer radialement.

## Claims

1. Guide bush, notably adapted for use with a machine tool, such as an automatic lathe with a travelling headstock and of the type comprising :
- a bush-holder (2) adapted to be positioned with respect to said lathe,
- a quill (4) integral with the bush-holder (2) and comprising a guiding clamp (6) adapted to receive and rotatably guide a workpiece (B) to be machined,
- means for opening and closing the guiding clamp (6) so as to adjust the diameter of the latter in respect of the diameter of the workpiece, and
- regulating means adapted to monitor the opening and closing means in order to compensate for positive and negative variations in dimensional tolerances of the workpiece (B), characterized in that said regulating means comprise palpating means (90) which are located inside of the bush (1), in frictional contact with the workpiece to be machined (B), these palpating means (90) which are sensitive to all variations in the exterior diameter of the workpiece (B) instantaneously actuating the means for opening and closing the clamp as a direct result of said variations, in order to provide a constant adjustment between the opening of the bush (1) and the workpiece (B).

2. Guide bush according to claim 1, characterized in that the palpating means (90) are placed near to the guiding clamp (6) and upstream therefrom, with respect to the forward direction of the workpiece (B) in the bush (1).

3. Guide bush according to claim 1 or 2, characterized in that said palpating means are constituted by essentially mechanical members (91), rotationally linked to the quill (4).

4. Guide bush according to one of claims 1 to 3, characterized in that the palpating means (90) are constituted by segments having the exterior trunconic form, bearing against a corresponding trunconic surface (89) of the quill (4).

5. Guide bush according to one of claims 1 to 4, characterized in that the guiding clamp (6) includes rollers or wheels (80) capable of coming into rolling contact directly on the exterior diameter of the workpiece (B).

6. Guide bush according to claim 5, characterized in that the rollers or wheels (80) are housed in a ring (84) which has a trunconic exterior circumference bearing against a corresponding trunconic surface (89) of the quill (4).

7. Guide bush according to claim 6, characterized in that the palpating means (90) bear laterally against the ring (84).

8. Guide bush according to any one of the preceding claims, characterized in that said quill (4) cooperates with the return means (R) so as to be able to make, in response to the action of the palpating means (90), an oscillating rotation movement around a work position (PT) corresponding to said adjustment.

9. Guide bush according to claim 8, characterized in that the return means (R) have a resilient member (56) connected to the quill (4) and capable of inducing its rotating movement and its concomitant translatory displacement to radially urge the guiding clamp (6) in its radial closing direction.

10. Guide bush according to claim 9, characterized in that the return means (R) have a rod (46) constituting a lever arm, this rod (46) which is solid with the quill (4) being connected to a traction spring forming the resilient member (56), said rod (46) being limited in its angular movement between two stops (68, 70, 72).

11. Guide bush according to claim 8, characterized in that it comprises transformational movement members (VE) adapted to convert the rotating oscillating movement of the quill (4) into a concomitant translatory movement thereof, this translatory movement being adapted to directly actuate the opening and closing means of the clamp (6).

12. Guide bush according to claim 11, characterized in that the translatory movement means comprise a screw-nut system (VE) associated with the quill (4).

13. Guide bush according to claim 12, characterized in that the screw-nut system (VE) has a ballscrew the screw (V) of which is disposed on the quill (4), while the nut (E) is disposed in a ring (66) rigidly mounted with respect to the bush support (2).

14. Guide bush according to claim 11, characterized in that the opening means of the guiding clamp (6) have a resilient member (100) actuated by the translatory movement of the quill (4).

15. Guide bush according to claim 14, characterized in that the resilient member (100) is composed of a helicoidal compression spring housed inside the quill (4).

16. Guide bush according to claim 15, characterized in that the helicoidal compression spring (100) is capable of moving the guiding clamp (6) axially in relation to the quill (4) to release this radially.

## Patentansprüche

1. Führungsbuchse insbesondere bestimmt zur Ausrüstung einer Werkzeugmaschine, wie einer Abstechdrehmaschine mit Reitstock, und von der Bauart, die umfaßt:
- einen Buchsenträger (2), bestimmt, um relativ zu der Drehmaschine positioniert zu werden,
- eine Hülse (4), die mit dem Buchsenträger (2) verbunden ist und eine Führungszange (6) umfaßt, die eine zu bearbeitende Stange (B) aufnehmen und bei der Drehung führen kann,
- öffnungs- und Schließmittel der Führungszange (6), die deren Durchmesser relativ zum Stangendurchmesser einjustieren, und
- Reguliermittel, die die öffnungs- und Schließmittel steuern können zwecks Kompensation von positiven und negativen Abmessungsvariationen des Außendurchmessers der Stange (B), dadurch gekennzeichnet, daß die Reguliermittel Fühlermittel (90) umfassen, die im Inneren der Buchse (1) angeordnet sind in Reibungskontakt mit der zu bearbeitenden Stange (B), welche Fühlermittel (90), die empfindlich gegenüber jeder Veränderung des Außendurchmessers der Stange (B) sind, in augenblicklicher Weise die Öffnungs- und Schließmittel der Zange steuern in Reaktion auf die genannten Veränderungen, um eine konstante, Einjustierung zwischen der Öffnung derBuchse (1) und der Stange (B) zu gewährleisten.

2. Führungsbuchse nach Anspruch 1, dadurch gekennzeichnet, daß die Fühlermittel (90) nahe der Führungszange (6) und, bezogen auf die Vorschubrichtung der Stange (B) in der Buchse (1), vor dieser angeordnet sind.

3. Führungsbuchse nach Anspruch 1 oder 2, dadurch gekennzeichnet, daß die Fühlermittel von im wesentlichen mechanischen Organen (91) gebildet sind, drehfest mit der Hülse (4).

4. Führungsbuchse nach einem der Ansprüche 1 bis 3, dadurch gekennzeichnet, daß die Fühiermittel (90) von Segmenten mit kegelstumpfförmiger Außenform gebildet sind, die an einer entsprechenden kegelstumpfförmigen Oberfläche (89) der Hülse (4) abgestützt sind.

5. Führungsbuchse nach einem der Ansprüche 1 bis 4, dadurch gekennzeichnet, daß die Führungszange (6) Schub- oder Rollsteine (80) umfaßt, die in direkten Abrollkontakt mit dem Außendurchmesser der Stange (B) bringbar sind.

6. Führungsbuchse nach Anspruch 5, dadurch gekennzeichnet, daß die Schub- oder Rollsteine (80) in einem Ring (84) untergebracht sind, der einen äußeren kegelstumpfförmigen Umfang aufweist, der an einer entsprechenden kegelstumpfförmigen Oberfläche (89) der Hülse (4) abgestützt ist.

7. Führungsbuchse nach Anspruch 6, dadurch gekennzeichnet, daß die Fühlermittel (90) in seitlicher Anlage an dem Ring (84) positioniert sind.

8. Führungsbuchse nach einem der vorangehenden Ansprüche, dadurch gekennzeichnet, daß die Hülse (4) mit Rückstellmitteln (R) zusammenwirkt, um in Reaktion auf die Wirkung der Fühlermittel (90) eine oszillierende Drehbewegung um eine Arbeitsposition (PT) entsprechend der Einjustierung ausführen zu können.

9. Führungsbuchse nach Anspruch 8, dadurch gekennzeichnet, daß die Rückstellmittel (R) ein elastisches Organ (56) umfassen, das mit der Hülse (4) verbunden ist und die Drehbewegung und gleichzeitige translatorische Verlagerung provozieren kann, um radial die Führungszange (6) in ihrer radialen Schließrichtung zu belasten.

10. Führungsbuchse nach Anspruch 9, dadurch gekennzeichnet, daß die Rückstellmittel (R) eine Stange (46), die einen Hebelarm bildet, umfassen, welche Stange (46), die mit der Hülse (4) verbunden ist, mit einer Zugfeder, die das elastische Organ (56) bildet, verbunden ist, welche Stange (46) in ihrer Winkelverlagerung zwischen zwei Anschlägen (68, 70, 72) begrenzt ist.

11. führungsbuchse nach Anspruch 8, dadurch gekennzeichnet, daß sie Bewegungstransformationsorgane (VE) umfaßt, um die oszillierende Drehbewegung der Hülse (4) in eine gleichzeitige translatorische Verlagerung derselben umzusetzen, welche translatorische Verlagerung geeignet ist, direkt die Öffnungs- und Schließmittel der Zange (6) zu betätigen.

12. Führungsbuchse nach Anspruch 11, dadurch gekennzeichnet, daß die Bewegungstransformationsmittel ein der Hülse (4) zugeordnetes Schraubenmutternsystem (VE) umfassen.

13. Führungsbuchse nach Anspruch 12, dadurch gekennzeichnet, daß das Schraubenmutternsystem (VE) eine Kugelschraubspindel umfaßt, deren Spindel auf der Hülse (4) ausgebildet ist, während die Mutter (E) in einem stationär relativ zu dem Buchsenträger (2) montierten Ring (66) ausgebildet ist.

14. Führungsbuchse nach Anspruch 11, dadurch gekennzeichnet, daß die Mittel zum Öffnen der Führungszange (6) ein elastisches Organ (100) umfassen, betätigt durch die translatorische Verlagerung der Hülse (4).

15. Führungsbuchse nach Anspruch 14, dadurch gekennzeichnet, daß das elastische Organ (100) von einer Schraubendruckfeder gebildet wird, positioniert im Inneren der Hülse (4).

16. Führungsbuchse nach Anspruch 15, dadurch gekennzeichnet, daß die Schraubendruckfeder (100) die Führungszange (6) relativ zur Hülse (4) axial für die radiale Freisetzung verlagern kann.
